# EUROPEAN PATENT SPECIFICATION

(11) **EP 3 944 967 B1**
(45) Date of publication and mention of the grant of the patent: **03.05.2023**
(21) Application number: 21184231.5
(22) Date of filing: 07.07.2021
(51) Int. Cl.: B60C 11/00

(54) **MOTORCYCLE TYRE**
MOTORRADREIFEN
PNEUMATIQUE DE MOTOCYCLETTE

(30) Priority: 29.07.2020 JP 2020127922
(43) Date of publication of application: 02.02.2022
(73) Proprietor: Sumitomo Rubber Industries, Ltd., Kobe-shi, Hyogo-ken 651-0072 (JP)
(72) Inventor: KOBORI, Shuji, Kobe-shi, 651-0072 (JP)
(74) Representative: Manitz Finsterwald Patent- und Rechtsanwaltspartnerschaft mbB

(56) References cited:
- EP-A1- 3 395 589
- JP-A- H10 181 311
- JP-A- H11 245 619
- JP-A- 2009 051 313
- JP-A- 2010 215 115
- US-A- 4 945 964

## Description

### BACKGOUND ART

### Field of the Invention

The present invention relates to a motorcycle tyre.

### Description of the Related Art

The following Patent document 1 discloses a pneumatic tyre for two-wheeled vehicle which includes a belt layer and a tread rubber disposed outwardly of the belt layer in the tyre radial direction. The belt layer includes a spiral belt layer having a cord oriented at an angle of from 0 to 5 degrees with respect to the tyre equator and a crossed belt layer having cords oriented at an angle of 50 degrees. The tread rubber includes a surface layer, and a dissimilar rubber layer disposed inside the surface layer in the tyre radial direction.

### [Patent documents]

[Patent document 1]
Japanese Unexamined Patent Application Publication 2009-96426;

JP 2009 051313 A discloses a pneumatic tyre comprising the features of the preamble of claim 1.

JP H10 181311 A discloses a pneumatic tyre comprising features according to a related technology.

EP 3 395 589 A1 also discloses a pneumatic tyre comprising features according to a related technology.

US 4 945 964 A also discloses a pneumatic tyre comprising features according to a related technology.

JP 2010 215115 A also discloses a pneumatic tyre comprising features according to a related technology.

### SUMMARY OF THE INVENTION

The spiral belt layer as described above is effective in improving stability at high-speed driving, but has a problem of excessively increasing the rigidity of the tread portion, which may deteriorate ride comfort performance of the tyre.

From this point of view, a pneumatic tyre for two-wheeled vehicle having a so-called band-less structure, in which the belt layer is provided with only the crossed belt layer, has also been proposed. However, when the tyre is being vulcanized, the vicinity of the tyre equator of the crossed belt layer expands outwardly in the tyre radial direction more than the vicinity of the tread shoulders. Thus, the cord spacing of the crossed belt layer becomes large, and rigidity of the crossed belt layer tends to be small. For this reason, such a pneumatic tyre for motorcycles with a band-less structure may have reduced steering stability.

The present invention has been made in view of the above circumstances and has a major object to provide a motorcycle tyre capable of improving steering stability while maintaining ride comfort.

This object is satisfied by a motorcycle tyre comprising the features of claim 1.

In one aspect of the invention, the motorcycle tyre includes a tread portion having a ground contacting surface, a carcass, a breaker layer disposed outwardly in a tyre radial direction of the carcass in the tread portion, the breaker layer including one or more breaker plies having a plurality of cords oriented at an angle equal to or more than 15 degrees with respect to a tyre equator, and a tread rubber disposed outwardly in the tyre radial direction of the breaker layer so as to form a band-less structure in which the tread rubber is arranged so as to be directly in contact with the breaker layer in the tyre radial direction, wherein the tread rubber includes a cap rubber layer forming the ground contacting surface of the tread portion, and a base rubber layer disposed inwardly in the tyre radial direction of the cap rubber layer and having complex modulus greater than that of the cap rubber layer, the base rubber layer extends between a pair of outermost ends thereof so as to across the tyre equator, and a thickness of the base rubber layer at the tyre equator is greater than that of the outermost ends. A width in a tyre axial direction between the outermost ends of the base rubber layer is equal to or more than 60% and equal to or less than 80% of a tread width between tread edges in the tyre axial direction.

In another aspect of the invention, a thickness of the base rubber layer may decrease from the tyre equator toward both outer sides in a tyre axial direction.

In another aspect of the invention, a thickness of the base rubber layer may decrease continuously from the tyre equator to the pair of outermost ends of the base rubber layer.

In another aspect of the invention, the base rubber layer may have loss tangent smaller than that of the cap rubber layer.

In another aspect of the invention, at the tyre equator, a thickness of the base rubber layer may be in a range of 30% to 70% of a thickness of the tread rubber.

In another aspect of the invention, at the tyre equator, a thickness of the base rubber layer may be in a range of 40% to 60% of a thickness of the tread rubber.

In another aspect of the invention, at positions 10 mm inward in a tyre axial direction from respective tread edges, a thickness of the base rubber layer may be equal to or less than 30% of a thickness of the tread rubber.

In another aspect of the invention, at positions 10 mm inward in a tyre axial direction from respective tread edges, a thickness of the base rubber layer may be in a range of 5% to 20% of a thickness of the tread rubber.

### BRIEF DESCRIPTION OF THE DRAWINGS

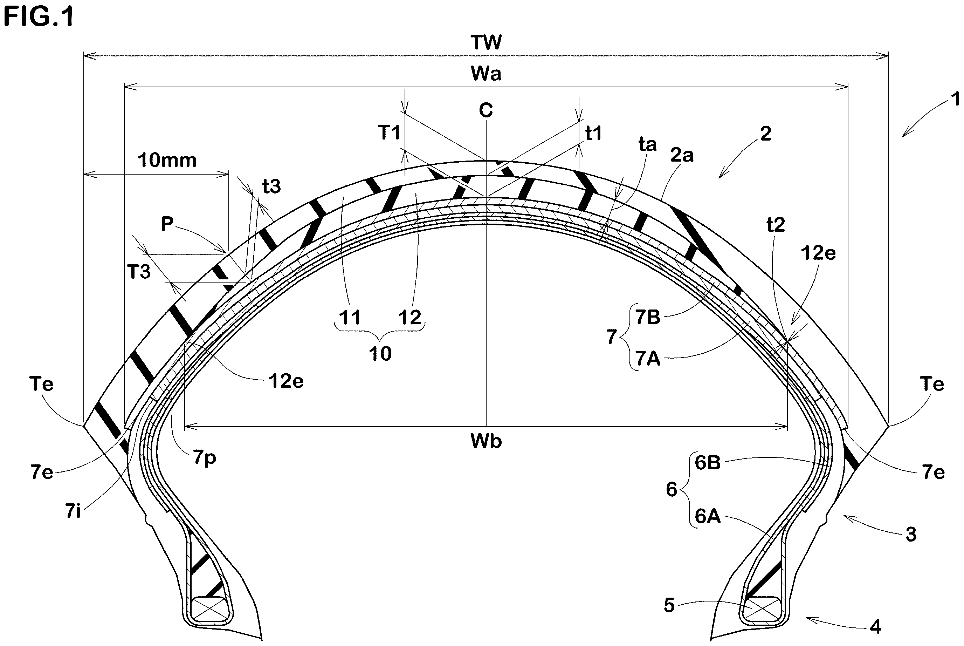

FIG. 1 is a cross-sectional view of an exemplary tyre according to one or more embodiments.

### DESCRIPTION OF THE PREFERRED EMBODIMENTS

An embodiment of the present invention will be explained below with reference to the accompanying drawings.

FIG. 1 is a cross-sectional view of an exemplary motorcycle tyre 1 (hereinafter simply referred to as "tyre") under a normal state according to one or more embodiments. The tyre 1 according to the present embodiment is suitably used for on-road driving such as on a dry asphalt road surface. However, the tyre 1 according to the present invention is not limited to such an aspect of use.

As used herein, the "normal state" is such that the tyre 1 is mounted onto a standard wheel rim (not illustrated) with a standard pressure but loaded with no tyre load. Unless otherwise noted, dimensions of portions of the tyre 1 are values measured under the normal state.

As used herein, the "standard wheel rim" is a wheel rim officially approved for each tyre by standards organizations on which the tyre 1 is based, wherein the standard wheel rim is the "standard rim" specified in JATMA, the "Design Rim" in TRA, and the "Measuring Rim" in ETRTO, for example.

As used herein, the "standard pressure" is a standard pressure officially approved for each tyre by standards organizations on which the tyre 1 is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

As illustrated in FIG. 1, the tyre 1 according to the present embodiment includes a tread portion 2 which is curved in an arc shape such that an outer surface of the tread portion 2 is convex outwardly in the tyre radial direction in the tyre cross-sectional view.

The tyre according to the present embodiment further includes a carcass 6, a breaker layer 7 disposed outwardly in the tyre radial direction of the carcass 6 in the tread portion 2, and a tread rubber 10 disposed outwardly in the tyre radial direction of the breaker layer 7.

The carcass 6, for example, includes a first carcass ply 6A and a second carcass ply 6B disposed outwardly in the tyre radial direction of the first carcass ply 6A. In the present embodiment, the first carcass ply 6A extends between axially spaced bead cores 5 disposed in bead portions 4. In the present embodiment, the second carcass ply 6B has both ends which terminate in sidewall portions 3 without reaching the bead cores 5. The carcass 6, for example, may employ a conventional structure.

In the present embodiment, the tread portion 2 has a band-less structure in which the tread rubber 10 is arranged so as to be directly in contact with the breaker layer 7 in the tyre radial direction. In other words, the tread portion 2 according to the present embodiment is not provided with any band layers comprising one or more band plies having a cord oriented at an angle of less than 15 degrees with respect to the tyre equator C. Such a tread portion 2 can improve ride comfort.

The breaker layer 7 includes one or more breaker plies 7p having a plurality of cords (not illustrated) oriented at an angle equal to or more than 15 degrees with respect to the tyre equator C. In addition, the breaker layer 7 makes rigidity near the tyre equator C smaller than rigidity on tread edges Te sides. As used herein, the "tread edges Te" are the outermost edges of the ground contact patch of the tread portion 2 in the tyre axial direction.

In the present embodiment, the breaker layer 7 includes two layers of first and second breaker plies 7A and 7B that are superimposed in the tyre radial direction. The first breaker ply 7A, in the present embodiment, has a development width as well as axial width smaller than that of the second breaker ply 7B. The both ends 7e in the tyre axial direction of the second breaker ply 7B are located nearer the respective tread edges Te than the both ends 7i in the tyre axial direction of the first breaker ply 7A. A distance Wa in the tyre axial direction between the both ends 7e of the second breaker ply 7B is preferably equal to or more than 85% of the tread width TW, but preferably 95% or less of the tread width TW. Note that the tread width TW is a distance in the tyre axial direction between the tread edges Te.

In the present embodiment, the tread rubber 10 includes a cap rubber layer 11 forming a ground contacting surface 2a of the tread portion 2, and a base rubber layer 12 disposed inwardly in the tyre radial direction of the cap rubber layer 11. The base rubber layer 12 extends between a pair of outermost ends 12e thereof so as to across the tyre equator C. The cap rubber layer 11, for example, extend across the tyre equator C beyond the both outermost ends 12e of the base rubber layer 12 outwardly in the tyre axial direction. The tread rubber 10, in the present embodiment, consists of the cap rubber layer 11 and the base rubber layer 12. That is, the cap rubber layer 11 according to the present embodiment is directly in contact with the base rubber layer 12.

The base rubber layer 12 has complex modulus E* greater than that of the cap rubber layer 11. In addition, a thickness t1 of the base rubber layer 12 at the tyre equator C is greater than a thickness t2 of the outermost ends 12e. The base rubber layer 12 having a relatively large complex modulus E* increases rigidity of the tread portion 2 near the tyre equator C, thus improving steering stability performance, especially transient property which is operability for leaning a vehicle body between straight running and turning, and braking performance. In addition, the cap rubber layer 11 having a relatively small complex elastic modulus E* generates a large amount of heat during running. Since the cap rubber layer 11 forms the ground contacting surface 2a, it increases the frictional force with the road surface and can improve steering stability performance, especially grip performance.

Preferably, a ratio E^{∗}2/E^{∗}1 of the complex modulus E*2 of the base rubber layer 12 to the complex modulus E^{∗}1 of the cap rubber layer 11 is in a range of 1.1 to 1.8. By setting the ratio E^{∗}2/E^{∗}1 being 1.1 to 1.8 and providing the difference in thickness t1 and t2 of the base rubber layer 12, the difference in rigidity of the tread portion 2 inside and outside in the tyre axial direction becomes smaller. Thus, steering stability performance can further be improved. When the ratio E^{∗}2/E^{∗}1 is less than 1.1, the above-mentioned effect is less likely to be exerted. When the ratio E^{∗}2/E^{∗}1 exceeds 1.8, rigidity of the tread portion 2 on the tyre equator C may be excessively large, and rigidity of the tread portion 2 on the tread edges Te side may become excessively small. In order to effectively exert the above-mentioned effect, the ratio E^{∗}2/E^{∗}1 is more preferably equal to or more than 1.2, but preferably equal to or less than 1.6. In addition, the complex modules E*2 of the base rubber layer 12 is preferably equal to or more than 3.0 MPa, more preferably equal to or more than 5.0 MPa, still further preferably equal to or more than 7.0 MPa, but preferably equal to or less than 20.0 MPa, more preferably equal to or less than 16.0 MPa, still further preferably equal to or less than 14.0 MPa.

A thickness ta of the base rubber layer 12 decreases from the tyre equator C toward both outer sides in the tyre axial direction. As a result, the difference in rigidity between the inside and outside of the tread portion 2 in the tyre axial direction can be further reduced.

In order to exert the above-mentioned action more effectively, a thickness ta of the base rubber layer 12 preferably decreases continuously from the tyre equator C to the pair of outermost ends 12e of the base rubber layer 12. In the present embodiment, the tread rubber 10, in the region axially outside the outermost ends 12e, is formed by only the cap rubber layer 11.

Preferably, at the tyre equator C, a thickness t1 of the base rubber layer 12 is in a range of 30% to 70% of a thickness T1 of the tread rubber 10. By setting the thickness t1 being equal to or more than 30% of the thickness t1, rigidity of the tread portion 2 on or around the tyre equator C can be improved. By setting the thickness t1 being equal to or less than 70% of the thickness T1, excessive increase of rigidity of the tread portion 2 on or around the tyre equator C can be prevented. From this point of view, the thickness t1 is more preferably equal to or more than 40% of the thickness T1, but more preferably equal to or less than 60% of the thickness T1.

At positions P which is 10 mm inward in the tyre axial direction from respective tread edges Te, a thickness t3 of the base rubber layer 12 is preferably equal to or less than 30% of a thickness T3 of the tread rubber 10. As a result, rigidity of the tread rubber 10 or the tread portion 2 is made uniform inside and outside in the tyre axial direction so that steering stability of the tyre can further be improved. From this point of view, the thickness t3 is more preferably equal to or more than 5% of the thickness T3, but more preferably equal to or less than 20% of the thickness T3.

Although not particularly limited, the thickness t3 of the base rubber layer 12 at the positions P is preferably equal to or more than 0.3 times the thickness t1 of the base rubber layer 12 at the tyre equator C, more preferably equal to or more than 0.4 times, but preferably equal to or less than 0.8 times the thickness t1 of the base rubber layer 12 at the tyre equator C, more preferably equal to or less than 0.7 times.

A width Wb in the tyre axial direction between the outermost ends 12e of the base rubber layer 12 is equal to or more than 60% of the tread width TW, preferably equal to or more than 65%, but equal to or less than 80% of the tread width TW, preferably equal to or less than 75%. The outermost ends 12e of the base rubber layer 12 are located closer to the tyre equator C than outermost ends 7i in the tyre axial direction of the first breaker ply 7A. The cap rubber layer 11, in this embodiment, forms tread edges Te.

The base rubber layer 12 has loss tangent tanδ2 smaller than loss tangent tanδ1 of the cap rubber layer 11. As a result, heat generation in the base rubber layer 12 may be suppressed, and durability of the tyre can be improved. In addition, the cap rubber layer 11 having a relatively large loss tangent tanδ can exhibit excellent grip performance since the frictional force with the road surface is increased.

In order to exert the above-mentioned action more effectively, a ratio tanδ2/tanδ1 is preferably equal to or more than 0.5, more preferably equal to or more than 0.6, but preferably equal to or less than 0.9, more preferably equal to or less than 0.8. The ratio tanδ2/tanδ1 is a ratio of the loss tangent tanδ2 of the base rubber layer 12 to the loss tangent tan61 of the cap rubber layer 11. Further, the loss tangent tanδ2 of the base rubber layer 12 is preferably equal to or more than 0.10, more preferably equal to or more than 0.20, but preferably equal to or less than 0.40, more preferably equal to or less than 0.30.

As used herein loss tangent tanδ is the value measured under the following conditions according to the specification of JIS-K6394:
measuring device: viscoelastic spectrometer RSA (KABUSIKIKAISHA IWAMOTO SEISAKUSHO)
initial strain 10%;
dynamic distortion: 1%;
frequency 10 Hz;
tensile deformation mode; and
measured temperature 70 degrees C.

While some preferred embodiments of the present invention have been described in detail above, the present invention is not limited to the above-mentioned specific invention, but can be modified various aspects within the scope of the claims.

### [Example]

Motorcycle tyres having the basic structure shown in FIG. 1 were prototyped. Then, steering stability, braking performance, grip performance and durability of each prototype tyre were tested. In the comparative example tyre, the tread rubber is formed only by the cap rubber layer. The common specifications and test methods for each tyre are as follows.
Cap rubber layer
E^{∗}1: 5.3 MPa, and
tanδ1: 0.25

### Steering stability, braking performance and braking performance test:

Each prototype tyre was mounted on the front wheel of a motorcycle (displacement 1000cc) under the following conditions. A commercially available tyre was also mounted on the rear wheel under the following conditions. Then, a test rider rode the motorcycle on a dry asphalt road test course, and each performance was evaluated by the sensuality of the test rider. The test results are shown in Table 1 by the 10-point method with a maximum of 10 points. The larger the value, the better the performance is.

### Prototype tyre specification:

tyre size: 120/70ZR17
rim size: 17x3.50 MT
internal pressure: 200kPa

### Rear tyre specification:

tyre size: 180/55R17
rim size: 17x5.50MT
internal pressure: 200kPa

### Durability test:

The condition of the tread rubber of each prototype tyre was confirmed after the tyres were run for 10,000 km. Those with peeling or cracking are failed, and those without peeling are passed.

Table 1 shows the test results.

**[Table 1]**

| | | Ref. | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| | Thickness of base rubber layer | - | t1>t2 | t1>t2 | t1>t2 | t1>t2 | t1>t2 | t1>t2 | t1>t2 | t1>t2 | t1>t2 |
| | Ratio (E*2 /E^{∗}1) | - | 1.3 | 1.1 | 1.8 | 1.3 | 1.3 | 1.3 | 1.3 | 1.3 | 1.3 |
| | Ratio t3/t1 | - | 0.6 | 0.6 | 0.6 | 0.3 | 0.8 | 0.6 | 0.6 | 0.6 | 0.6 |
| | Ratio (tanδ / tanδ1) | - | 0.7 | 0.7 | 0.7 | 0.7 | 0.7 | 0.5 | 0.9 | 0.7 | 0.7 |
| | Ratio t1/T1 (%) | - | 50 | 50 | 50 | 50 | 50 | 50 | 50 | 30 | 70 |
| | Ratio t3/T3 (%) | - | 30 | 30 | 30 | 15 | 40 | 30 | 30 | 18 | 42 |
| Steering stability [10-point method] | | 2.5 | 8.0 | 7.4 | 8.4 | 7.9 | 7.8 | 8.3 | 7.6 | 7.6 | 8.3 |
| Braking performance [10-point method] | | 2.0 | 8.5 | 8.0 | 8.5 | 8.1 | 8.6 | 8.4 | 7.9 | 7.9 | 8.4 |
| Grip performance [10-point method] | | 7.0 | 8.0 | 8.4 | 7.1 | 7.9 | 7.6 | 7.1 | 8.3 | 8.3 | 7.1 |
| Total score [Larger is better.] | | 11.5 | 24.5 | 23.8 | 24.0 | 23.9 | 24.0 | 23.8 | 23.8 | 23.8 | 23.8 |
| Durability [passed or failed] | | failed | passed | passed | passed | passed | passed | passed | passed | passed | passed |

As a result of the test, it is confirmed that the tyres of examples are superior in steering stability, braking performance, grip performance and durability compared to the comparative example tyre.

## Claims

1. A motorcycle tyre (1) comprising:
a tread portion (2) having a ground contacting surface (2a);
a carcass (6);
a breaker layer (7) disposed outwardly in a tyre radial direction of the carcass (6) in the tread portion (2), the breaker layer (7) comprising one or more breaker plies (7A, 7B) having a plurality of cords oriented at an angle equal to or more than 15 degrees with respect to a tyre equator (C); and
a tread rubber (10) disposed outwardly in the tyre radial direction of the breaker layer (7) so as to form a band-less structure in which the tread rubber is arranged so as to be directly in contact with the breaker layer (7) in the tyre radial direction, wherein
the tread rubber (10) comprises
a cap rubber layer (11) forming the ground contacting surface (2a) of the tread portion (2), and
a base rubber layer (12) disposed inwardly in the tyre radial direction of the cap rubber layer (11) and having a complex modulus greater than that of the cap rubber layer (11),
the base rubber layer (12) extends between a pair of outermost ends (12e) thereof so as to cross the tyre equator (C), and
a thickness (ta) of the base rubber layer (12) at the tyre equator (C) is greater than that of the outermost ends (12e), **characterized in that**
a width (Wb) in a tyre axial direction between the outermost ends (12e) of the base rubber layer (12) is equal to or more than 60% and equal to or less than 80% of a tread width (TW) between tread edges (Te) in the tyre axial direction.

2. The motorcycle tyre (1) according to claim 1, wherein
a thickness (ta) of the base rubber layer (12) decreases from the tyre equator (C) toward both outer sides in a tyre axial direction.

3. The motorcycle tyre (1) according to claim 2, wherein
a thickness (ta) of the base rubber layer (12) decreases continuously from the tyre equator (C) to the pair of outermost ends (12e) of the base rubber layer (12).

4. The motorcycle tyre (1) according to any one of claims 1 to 3, wherein the base rubber layer (12) has loss tangent smaller than that of the cap rubber layer (11).

5. The motorcycle tyre (1) according to any one of claims 1 to 4, wherein
at the tyre equator (C), a thickness (t1) of the base rubber layer (12) is in a range of 30% to 70% of a thickness (T1) of the tread rubber (10).

6. The motorcycle tyre (1) according to any one of claims 1 to 4, wherein
at the tyre equator (C), a thickness (t1) of the base rubber layer (12) is in a range of 40% to 60% of a thickness (T1) of the tread rubber (10).

7. The motorcycle tyre (1) according to any one of claims 1 to 6, wherein at positions 10 mm inward in a tyre axial direction from respective tread edges (Te), a thickness (t3) of the base rubber layer (12) is equal to or less than 30% of a thickness (T3) of the tread rubber (10).

8. The motorcycle tyre (1) according to any one of claims 1 to 6, wherein
at positions 10 mm inward in a tyre axial direction from respective tread edges (Te), a thickness (t3) of the base rubber layer (12) is in a range of 5% to 20% of a thickness (T3) of the tread rubber (10).

## Patentansprüche

1. Motorradreifen (1), umfassend:
einen Laufflächenabschnitt (2), der eine Bodenkontaktfläche (2a) aufweist;
eine Karkasse (6);
eine Breakerschicht (7), die in dem Laufflächenabschnitt (2) in einer Reifenradialrichtung außerhalb der Karkasse (6) angeordnet ist, wobei die Breakerschicht (7) eine oder mehrere Breakerlagen (7A, 7B) mit mehreren Korden umfasst, die bezogen auf einen Reifenäquator (C) unter einem Winkel gleich oder größer als 15 Grad ausgerichtet sind; und
ein Laufflächengummi (10), das in der Reifenradialrichtung außerhalb der Breakerschicht (7) angeordnet ist, um dadurch eine bandlose Struktur zu bilden, in der das Laufflächengummi derart angeordnet ist, dass es mit der Breakerschicht (7) in der Reifenradialrichtung direkt in Kontakt steht, wobei
das Laufflächengummi (10) umfasst
eine Abdeckungsgummischicht (11), welche die Bodenkontaktfläche (2a) des Laufflächenabschnitts (2) bildet, und
eine Basisgummischicht (12), die in der Reifenradialrichtung innerhalb der Abdeckungsgummischicht (11) angeordnet ist und einen komplexen Modul größer als derjenige der Abdeckungsgummischicht (11) aufweist,
wobei sich die Basisgummischicht (12) zwischen einem Paar äußerster Enden (12e) von dieser derart erstreckt, dass sie den Reifenäquator (C) kreuzt, und
wobei eine Dicke (ta) der Basisgummischicht (12) an dem Reifenäquator (C) größer als diejenige an den äußerten Enden (12e) ist, **dadurch gekennzeichnet, dass**
eine Breite (Wb) in einer Reifenaxialrichtung zwischen den äußersten Enden (12e) der Basisgummischicht (12) gleich oder größer als 60% und gleich oder kleiner als 80% einer Laufflächenbreite (TW) zwischen Laufflächenrändern (Te) in der Reifenaxialrichtung ist.

2. Motorradreifen (1) nach Anspruch 1, wobei
eine Dicke (ta) der Basisgummischicht (12) von dem Reifenäquator (C) in Richtung beider Außenseiten in einer Reifenaxialrichtung abnimmt.

3. Motorradreifen (1) nach Anspruch 2, wobei
eine Dicke (ta) der Basisgummischicht (12) von dem Reifenäquator (C) bis zu dem Paar der äußerten Enden (12e) der Basisgummischicht (12) kontinuierlich abnimmt.

4. Motorradreifen (1) nach einem der Ansprüche 1 bis 3, wobei
die Basisgummischicht (12) einen Verlusttangens aufweist, der kleiner als derjenige der Abdeckungsgummischicht (11) ist.

5. Motorradreifen (1) nach einem der Ansprüche 1 bis 4, wobei
an dem Reifenäquator (C) eine Dicke (t1) der Basisgummischicht (12) in einem Bereich von 30% bis 70% einer Dicke (T1) des Laufflächengummis (10) liegt.

6. Motorradreifen (1) nach einem der Ansprüche 1 bis 4, wobei
an dem Reifenäquator (C) eine Dicke (t1) der Basisgummischicht (12) in einem Bereich von 40% bis 60% einer Dicke (T1) des Laufflächengummis (10) liegt.

7. Motorradreifen (1) nach einem der Ansprüche 1 bis 6, wobei
an Positionen 10mm innerhalb jeweiliger Laufflächenränder (Te) in einer Reifenaxialrichtung eine Dicke (t3) der Basisgummischicht (12) gleich oder kleiner als 30% einer Dicke (T3) des Laufflächengummis (10) ist.

8. Motorradreifen (1) nach einem der Ansprüche 1 bis 6, wobei
an Positionen 10mm innerhalb jeweiliger Laufflächenränder (Te) in einer Reifenaxialrichtung eine Dicke (t3) der Basisgummischicht (12) in einem Bereich von 5% bis 20% einer Dicke (T3) des Laufflächengummis (10) liegt.

## Revendications

1. Pneumatique pour motocyclette (1) comprenant :
une portion formant bande de roulement (2) ayant une surface de contact au sol (2a) ;
une carcasse (6) ;
une couche d'armature de sommet (7) disposée à l'extérieur dans une direction radiale du pneumatique de la carcasse (6) dans la portion formant bande de roulement (2), la couche d'armature de sommet (7) comprenant une ou plusieurs nappes d'armature de sommet (7A, 7B) ayant une pluralité de câblés orientés sous un angle égal ou supérieur à 15 degrés par rapport à un équateur de pneumatique (C) ; et
un caoutchouc de bande de roulement (10) disposé à l'extérieur dans la direction radiale du pneumatique de la couche d'armature de sommet (7) de manière à former une structure sans bande dans laquelle le caoutchouc de bande de roulement est agencé de manière à être en contact direct avec la couche d'armature de sommet (7) dans la direction radiale du pneumatique,
dans lequel
le caoutchouc de bande de roulement (10) comprend
une couche de caoutchouc de chape (11) formant la surface de contact au sol (2a) de la portion formant bande de roulement (2), et
une couche de caoutchouc de base (12) disposée à l'intérieur dans la direction radiale du pneumatique de la couche de caoutchouc de chape (11) et ayant un module complexe supérieur à celui de la couche de caoutchouc de chape (11),
la couche de caoutchouc de base (12) s'étend entre une paire d'extrémités les plus extérieures (12e) de celle-ci de manière à croiser l'équateur de pneumatique (C), et
une épaisseur (ta) de la couche de caoutchouc de base (12) au niveau de l'équateur de pneumatique (C) est supérieure à celle des extrémités les plus extérieures (12e),
**caractérisé en ce que**
une largeur (Wb) dans une direction axiale du pneumatique entre les extrémités les plus extérieures (12e) de la couche de caoutchouc de base (12) est égale ou supérieure à 60 % et est égale ou inférieure à 80 % d'une largeur de bande de roulement (TW) entre des bords de bande de roulement (Te) dans la direction axiale du pneumatique.

2. Pneumatique pour motocyclette (1) selon la revendication 1, dans lequel une épaisseur (ta) de la couche de caoutchouc de base (12) diminue depuis l'équateur de pneumatique (C) vers les deux côtés extérieurs dans une direction axiale du pneumatique.

3. Pneumatique pour motocyclette (1) selon la revendication 2, dans lequel une épaisseur (ta) de la couche de caoutchouc de base (12) diminue en continu depuis l'équateur de pneumatique (C) jusqu'à la paire d'extrémités les plus extérieures (12e) de la couche de caoutchouc de base (12).

4. Pneumatique pour motocyclette (1) selon l'une quelconque des revendications 1 à 3, dans lequel
la couche de caoutchouc de base (12) a une tangente de perte plus petite que celle de la couche de caoutchouc de chape (11).

5. Pneumatique pour motocyclette (1) selon l'une quelconque des revendications 1 à 4, dans lequel
au niveau de l'équateur de pneumatique (C), une épaisseur (t1) de la couche de caoutchouc de base (12) est dans une plage de 30 % à 70 % d'une épaisseur (T1) du caoutchouc de bande de roulement (10).

6. Pneumatique pour motocyclette (1) selon l'une quelconque des revendications 1 à 4, dans lequel
au niveau de l'équateur de pneumatique (C), une épaisseur (t1) de la couche de caoutchouc de base (12) est dans une plage de 40 % à 60 % d'une épaisseur (T1) du caoutchouc de bande de roulement (10).

7. Pneumatique pour motocyclette (1) selon l'une quelconque des revendications 1 à 6, dans lequel
à des positions de 10 mm à l'intérieur dans une direction axiale du pneumatique par rapport aux bords de bande de roulement (Te) respectifs, une épaisseur (t3) de la couche de caoutchouc de base (12) est égale ou inférieure à 30 % d'une épaisseur (T3) du caoutchouc de bande de roulement (10).

8. Pneumatique pour motocyclette (1) selon l'une quelconque des revendications 1 à 6, dans lequel
à des positions de 10 mm à l'intérieur dans une direction axiale du pneumatique par rapport aux bords de bande de roulement (Te) respectifs, une épaisseur (t3) de la couche de caoutchouc de base (12) est dans une plage de 5 % à 20 % d'une épaisseur (T3) du caoutchouc de bande de roulement (10).
